# EUROPEAN PATENT APPLICATION

(11) **EP 1 270 886 A1**
(43) Date of publication of application: **02.01.2003**
(21) Application number: 01202456.8
(22) Date of filing: 26.06.2001
(51) Int. Cl.: F01N 3/035, F01N 3/027, F01N 3/28, F01N 3/022, B01D 53/94

(54) **Process and device for decreasing the amount of NOx in a diesel exhaust system**

(71) Applicant: N.V. BEKAERT S.A., 8550 Zwevegem (BE)
(72) Inventor: The designation of the inventor has not yet been filed

(57) **Abstract**

A process and device for decreasing the amount of NOx in the exhaust gases of a diesel combustion system, comprising the steps of retaining soot and SOF on an electrically regenerable filter and adsorbing NOx on an NOx-adsorber. The adsorber NOx is later reduced to N2 by using thermal energy, CO and hydrocarbons, provided by the regeneration of the filter.

## Description

### Field of the invention.

The present invention relates to an improved process of decreasing the amount of NOx-elements in a diesel exhaust system. The invention further relates to an exhaust-cleaning unit comprising an NOx-adsorber able to perform this process.

### Background of the invention.

Reducing the amount of NOx in lean exhaust gases is commonly know in the art. The following catalytically approaches were investigated: NO decomposition catalyst, selective catalytic reduction with ammonia (SCR), selective catalytic reduction with hydrocarbons (DeNOx or lean NOx catalyst).
Although initially promising, catalytic decomposition of NO has proven difficult to realize. The decomposition is subject to inhibition by water, is very sensitive to poisoning by SO2, is effective only at low space velocities, and the catalyst activity and selectivity are not satisfactory. Selective catalytic reduction (SCR) of NOx can be realized if a reducing agent is injected into the gas upstream of the catalyst bed. SCR processes utilizing nitrogen containing reductants such as ammonia or urea. Disadvantages of SCR include high capital and operating costs, space requirements, generation of ammonia emissions, and fouling of equipment with ammonium sulfate (hazardous waste).
In the selective catalytic reduction with hydrocarbons (deNOx-catalysts), the urea or ammonia of the SCR system is replaced by hydrocarbons. The developed deNOx catalysts have specific drawbacks, related primarily to narrow temperature windows, insufficient thermal durability and/or sulfur tolerance. More importantly 10-20% NOx conversions of the system on regulated test cycles have been reported. deNOx catalysts are not currently seen as technology capable of coping with the stringent future emission targets.

To overcome the situation of low NOx conversions of the deNOx catalysts under lean conditions, so-called NOx adsorbing compounds were incorporated. These compounds were supposed to adsorb NOx during periods of low exhaust gas temperature, when de deNOx catalyst activity was low, and to release it at temperatures which could favor the selective reaction with hydrocarbons.

The idea above, addition of NOx adsorbing compounds, coupled with the three-way catalyst result is the NOx adsorber. The concept of the NOx adsorber/catalyst, also refered to as the NOx trap, has been developed based on the acid-base washcoat chemistry. NOx adsorbers are materials which store NOx under lean combustion conditions (low air to fuel ratio) and release and catalytically reduce the stored NOx under rich combustion conditions. The NOx adsorber can achieve 90% NOx reduction efficiency over relative wide temperature window.

The catalyst washcoat combines three active components:
(1) an oxidation catalyst, eg Pt
(2) an NOx adsorbant eg BaO
(3) a reduction catalyst eg Rh.

The system cycles through two stages of operation, including
(1) storage (chemisorption) of NOx in the catalyst washcoat during lean combustion operation
(2) regeneration of the trap through desorption and non-selective catalytic reduction of NOx during periods of rich combustion operation.

The two stages of operation, storage and regeneration, essentially comprises in total 3 steps:
(1) NOx emissions from the diesel engine are typically composed of 90-95% nirtric oxide, NO. The NO is oxidised as much as possible to NO2 over an appropriate oxidising catalyst, eg Pt
(2) Adsorbing the obtained NO2, as well as the remaining NO, by the adsorbing compound, eg BaO, in the form of an inorganic nitrate. As an example, when BaO is used, NO and NO2 is adsorbed or so-called "trapped" providing Ba(N03)2. NO2 is to be provided as much as possible, since NO2 is adsorbed best by the NOx-adsorbing compounds.
(3) Regeneration of the NOx adsorber involves reaction mechanisms virtually identical to those found in the gasoline three-way catalyst. A reductant, presumable carbon monoxide or hydrocarbons, reacts with NOx in the absences of oxygen to form elementary nitrogen. Therefore periodic "rich" conditions, a rich air to fuel mixture,. are necessary. In general, such enrichment of the exhaust gases with additional HC, could be realized by two methods: (1) Injection of hydrocarbons, preferable diesel fuel, into the exhaust system upstream of the catalyst or (2) Late-in-cylinder injection in a common rail fuel system (or merely late injection timing in conventional fuel systems).

Enrichment of the exhaust gases is necessary in order to obtain the desadsorbtion of the trapped N-comprising compounds.

Extra fuel or diesel is to be provided in order to obtain the releasing of the trapped N-comprising compounds. This requires well-defined motor management, which may require relatively complicated equipment.

Also, S-elements, present in the fuel or diesel usually poison the NOx-adsorber. Due to the combustion, this sulfur is combusted to SO2, which usually adsorbs also on the NOx-adsorber, after it has been further oxidized by the oxidizing catalyst. Since the S-comprising compounds on the NOx-adsorber are much more stable as compared to the N-comprising compounds, the S-comprising compounds cannot be released under rich combustion circumstances. The S-comprising compounds stay present on the NOx-adsorber. Therefor, the above described process as known in the art can only be used for diesel combustion processes, using fuel or diesel with reduces amount of sulfur.

### Summary of the invention.

The present invention relates to a process of decreasing the amount of NOx in the exhaust gasses of a diesel combustion system, comprising the steps of
■ Providing an electrically regeneratable filter comprising metal fibers, and an NOx-adsorber, which comprises a substrate, an oxidizing catalyst, a reducing catalyst and a NOx-adsorbing compound;
■ retaining soot and soluble organic fraction (hereafter referred to as SOF) out of the exhaust gasses flowing through the electrically regeneratable filter;
■ Oxidizing NOx, present in the exhaust gasses flowing through the substrate, using a catalytic reaction of the oxidizing catalyst, and adsorbing the oxidized NOx as adsorbed N-comprising components on the NOx-adsorbing compound;
■ Regenerating the electrically regeneratable filter by electrical current which is provided to the electrically regeneratable filter, increasing the filters temperature in order to provide CO2, CO and hydrocarbon compounds to the NOx-adsorber; the increased temperature initiate combustion of the retained soot and may vaporize and/or partially combust SOF;
■ desadsorbing and reducing the adsorbed NOx to N2, using a catalytic reaction of the reducing catalyst;

During desadsorbtion of the retained N-comprising compounds, the temperature of the substrate may be increased above the decomposition temperature of the N-comprising components. The thermal energy being radiated from the electrically conductive filter is used to increase the temperature of this substrate. The CO and hydrocarbons, provided by the regeneration of the electrically regeneratable filer, are used to reduce the NOx-desadsobred compounds to N2 over the reduction catalyst.

With diesel combustion system is meant a system which burns or combusts diesel, such as diesel burners or diesel engines, stationary or integrated in cars, trucks, boats or other transport means.

The substrate loaded with an oxidizing catalyst, a reducing catalyst and a NOx-adsorbing compound is hereafter referred to as NOx-adsorber.

The retaining of the soot and SOF, the oxidation step and the adsorbing step are done when the exhaust gasses are passing trough the electrically regeneratable filter. The regeneration of the electrically regeneratable filter, the desadsorbtion and reducing steps may be done while exhaust gasses pass through the substrate (hereafter referred to as "on-line"), or the exhaust gasses are at least partially prevented to pass through the electrically conductive substrate (hereafter referred to as off-line"). The latter off-line situation is to be preferred. The regeneration of the electrically regeneratable filter, the releasing and reducing steps are done periodically, preferably when the NOx-adsorber and/or the soot filter is near its saturation point. The time before executing these steps may be preset or calculated, taking the combustion conditions into account, or may depend on an measurement of the N02-level downstream the electrically regenerabtable filter and NOx-adsorber. Also the time of heating the electrically regeneratable filter may be preset or calculated, taking the load of the NOx-adsorber and the electrically regeneratable filter into account.

Alternatively, in case the desadsorption of the NOx-adsorber is to be executed more frequently than the regeneration of the electrically regeneratable filter, additional desadsorbing and reducing steps may be executed, using combustion under rich combustion circumstances.

the process as subject of the invention, using the Joule-effect of electric current flowing through the electrically regeneratable filter, so increasing the temperature of the substrate, has several advantages.

No additional fuel, e.g. diesel is to be consumed to start and maintain the reducing reaction, since the temperature to which the electrically regeneratable filter may be heated ranges unto 1000°C. or even more. The radiation of thermal energy may be used to increase the temerature of the NOx-adsorber to a temperature ranging unto 250°C or even 300°C, which may be sufficient to decompose the N-comprising components, trapped on the NOx-adsorber. the hydrocarbons and CO, obtained by combustion of the soot and vaporization of SOF are used as reductans during the reduction reaction of the decomposed N-comprising compounds, providing N2.

Further, the regeneration of the electrically regeneratable filter and the decomposing and reduction of the N-comprising components may be done periodically. The management of these steps of the process can easily be automated, using appropriate electrical equipment and components, such as integrated circuits.

A preferred process as subject of the invention uses also an electrically conductive substrate, part of the NOx-adsorber. The oxidation and reducing catalyst, as well as the NOx-adsorbing compound may be coated on such an electrically conductive substrate, e.g. a metal fiber fleece.

Using such an electrically conductive substrate for the NOx-adsorber, an extra advantage is obtained. The temperature of the NOx-adsorber may be increased to more than 700°C, which also decomposes the S-comprising components, being trapped on the NOx-adsorber. So the "S-poisoning" of the NOx-adsorber may be limited or reversed when the substrate is heated above the decomposing temperature of the S-comprising components.

As subject of the invention the NOx-adsorber comprises an oxidizing catalyst, e.g. Pt or Pd. The NOx-adsorber further comprises a reducing catalyst, e.g. Rh. The NOx-adsorber also comprises an NOx-adsorbing compound, comprising alkali-earth metals, such as Mg, Ca, Sr or Ba, alkali metals such as Li, Na, K, or Cs or rare earth metals such as Y, La or other lanthanides. Those NOx-adsorbing compounds are preferably present as salt such as oxides. Preferably BaO is used.

Those 3 materials, hereafter referred to as "active elements", may be present homogeneously over the depth of the substrate, through which the exhaust gasses are to flow. Alternatively, each active element may be present at preferred depth of the substrate. They may be provided on the substrate using presently known coating techniques, such as CVD-techniques, sol-gel techniques or by using wash coats. The catalyst support and the active elements can be provided on the substrate using precipitation and coprecipitation techniques, e.g. using washcoats. The washcoats can be applied as an aqueous slurry, by a continuous or noncontinuous dipping process, washcoats can also be applied using a spray process. The catalyst support and active elements can also be provided on the substrate using a sol-gel preparation. If the above techniques only where used to add a support on the substrate, CVD techniques or other know coating techniques can be used to provide the substrate/support with the active elements.

Some metal fleece surface treatments may be used prior to the application of the above-described techniques, and some heat treatments can be applied afterwards.

The substrate of the NOx-adsorber may be a ceramic substrate or a fleece out of ceramic fibers. When an electrically conductive substrate is used to execute the process of decreasing the amount of NOx in exhaust systems as subject of the invention, the substrate preferably comprises metal fibers. These metal fibers may differ in alloy, length and diameter according to the required properties of the substrate. Preferably, the substrate consists of a metal fiber fleece. A sintered metal fiber fleece is mostly preferred. The weight, air permeability, thickness, electrical surface resistance, surface density and/or porosity may be varied to provide the required substrate properties.

The invention further relates to an exhaust-cleaning unit comprising an NOx-adsorber able to perform this process.

An exhaust-cleaning unit comprises an NOx-adsorber, comprising a substrate, which carries the oxidizing catalyst, the reducing catalyst and the NOx-adsorbing compound.

As subject of the invention the NOx-adsorber comprises an oxidizing catalyst, e.g. Pt or Pd. The NOx-adsorber further comprises a reducing catalyst, e.g. Rh. The NOx-adsorber also comprises an NOx-adsorbing compound, comprising alkali-earth metals, such as Mg, Ca, Sr or Ba, alkali metals such as Li, Na, K, or Cs or rare earth metals such as Y, La or other lanthanides. Those NOx-adsorbing compounds are preferably present as salt such as oxides. Preferably BaO is used.

Those 3 materials, hereafter referred to as "active elements", may be present homogeneously over the depth of the substrate, through which the exhaust gasses are to flow. Alternatively, each active element may be present at preferred depth of the substrate. They may be provided on the substrate using presently known coating techniques, such as CVD-techniques, sol-gel techniques or by using wash coats.

The weight, air permeability, thickness, surface density and/or porosity of the substrate may be varied to provide the required substrate properties.

The substrate preferably comprises or even consists of metal fibers. A 100% metal fiber fleece is preferably, possibly sintered. Such electrically conductive substrate may further comprise thermally resistant e.g. ceramic particles or thermally resistant e.g. ceramic fibers. The electrical resistance can be varied over the surface of the substrate, although preferably, this electrical resistance is identical over the surface of the substrate and not directionally dependent.

In the scope of the present invention, metal fibers are to be understood as all kinds of metal fibers, preferably stainless steel fibers. The alloy of metal or steel may be chosen depending on the temperature range which is to be withstand by the metal fibers. Stainless steel fibers of AISI alloys of the 300- or 400 series, or alloys such as Inconel® are to be preferred. In case high temperatures (e.g. above 700°C) are to be withstand during execution of the releasing and reducing steps, alloys comprising Fe, Al and Cr are preferred, such as Fecralloy®. The fibers may be obtained by any presently known production method, such as bundle drawing or shaving. Fiber equivalent diameters between land 100µm are to be used, preferably between 2 and 50µm, e.g. between 12 and 35 µm such as 12, 17 and 22µm. Preferably the metal fiber fleece is sintered using appropriate sintering circumstances, according to the alloy used. Preferably, the metal fibers are obtainable by bundle drawing or coil shaving. The latter is described more in detail in WO97/04152.

Equivalent diameter is to be understood as the diameter of a radial cut of an imaginary round fiber, having an identical surface as the radial cut of the fiber under consideration.

In order to be able to supply electrical current to an electrically conductive substrate, the electrically conductive substrate is provided with at least two contact bodies, via which the electrically conductive substrate may be connected by means of current supply cables with an electrical power system, e.g. a battery or an integrated circuit, periodically switching the electrical current in order to heat the NOx-adsorber. Due to the heating, the releasing step of the N-comprising compounds, adsorbed on the NOx-adsorbing compound is propagated, meanwhile providing CO and/or hydrocarbons to the NOx-adsorber.

This contact body divides in a proper way the electric current over the electrically conductive substrate. Preferably, these contact bodies are metal foils, e.g. Ni-foil or metal woven meshes, preferably sintered at two ends of the electrically conductive substrate. Alternatively, the contact bodies are thermally spayed on the electrically conductive substrate. The current supply cables are connected to the contact bodies by welding (e.g. spot-welding), thermally spraying, sintering or by means of bolts and nuts.

Depending on e.g. the electrical resistance of the electrical conductive substrate, or the current supplied to the electrically conductive substrate, the temperature during releasing step may possibly be further increased to temperatures above the decomposition temperature of S-comprising compounds, adsorbed on the NOx-adsorbing compound. Temperatures up to 700°c or even more may be applied.

An exhaust-cleaning unit as subject of the invention further comprises also an electrically regeneratable filter, filtering soot particulate and SOF out of the exhaust gasses. By providing electrical current to the electrically regeneratable filter, e.g. being a similar metal fiber fleece as for the electrically conductive substrate, the soot particulate, being captured by the filter may be combusted due to the increasing temperature. The electrically regeneratable filter is installed upstream of the electrically conductive substrate. During regeneration, the thermal energy, provided by this regeneration, may assist to increase the temperature of the electrically conductive substrate. The regeneration of the electrical regeneratabel filter is not to be simultaneously with the execution the releasing and reducing steps of the NOx-adsorber, although this may be preferred.

Preferably, the electrically regeneratable filter is a sintered metal fiber fleece, comprising metal fibers as indicated above according to the present invention. The weight, electrical surface resistance, air permeability, thickness, surface density and/or porosity of the substrate may be varied to provide the required substrate properties.

The electrically regeneratable filter, and the substrate in case of an electrically conductive substrate, may be connected to one appropriate integrated circuit, which provides electric current when required.

Alternatively, the electrically regeneratable filter functions as the electrically conductive substrate of the NOx-adsorber.

An exhaust-cleaning unit further comprises housing, which is to keep the substrate and the electrically regeneratable filter in place. Preferably, the electrically regeneratable filter is electrically insulated from the housing, or the housing itself is provided out of electrically insulating material. In case the substrate is electrically conductive, also this substrate is electrically insulated from the housing. Usually, both electrically regeneratable filter and substrate, possibly electrically conductive, are mount in the housing in an identical way, and the contact bodies on either of the two elements are similar if not identical.

In case the releasing and reducing steps of the NOx-adsorber and the regeneration of the electrically regeneratable filter are executed off-line, an exhaust-cleaning unit further comprises an appropriate valve system, which shut of the an exhaust-cleaning unit during the execution of the regeneration, releasing and reducing steps. This valve system may be controlled by the same integrated circuit as the one which provided the electric current to the electrically regeneratable filter and possibly the electrically conductive substrate.

An exhaust-cleaning unit may be installed in an exhaust system as such, or several exhaust-cleaning units may form part of a larger exhaust cleaning system, in order to provide sufficient exhaust cleaning capacity to the exhaust system. Each exhaust-cleaning unit separately, or a group of exhaust-cleaning units together may then be set in off-line condition for executing the regeneration, releasing and reducing steps, while the other exhaust-cleaning unit are in on-line condition executing the soot and SOF filtration, the oxidizing and adsorbing steps of the process as subject of the invention.

The exhaust-cleaning unit as subject of the invention may further comprise an extra separate sulfur trapping unit and/or a DOC-unit

### Brief description of the drawings.

The invention will now be described into more detail with reference to the accompanying drawings wherein
- FIGURE 1 shows a section of an exhaust cleaning unit as subject of the invention, parallel to an axis of the embodiment.
- FIGURE 2 shows a section of an exhaust cleaning unit as subject of the invention of FIGURE 1, perpendicularly to this axis of the embodiment
- FIGURE 3 shows a detail of FIGURE 1, according to AA'.
- FIGURE 4 shows an exhaust cleaning system as subject of the invention.

### Description of the preferred embodiments of the invention.

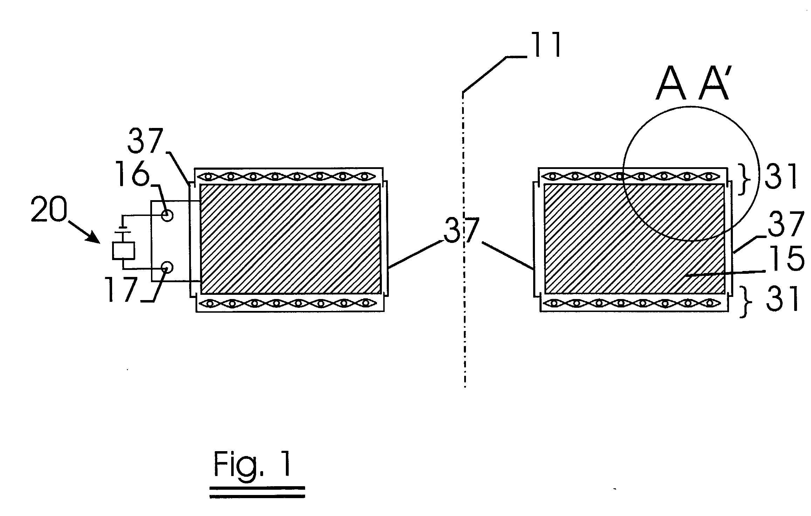

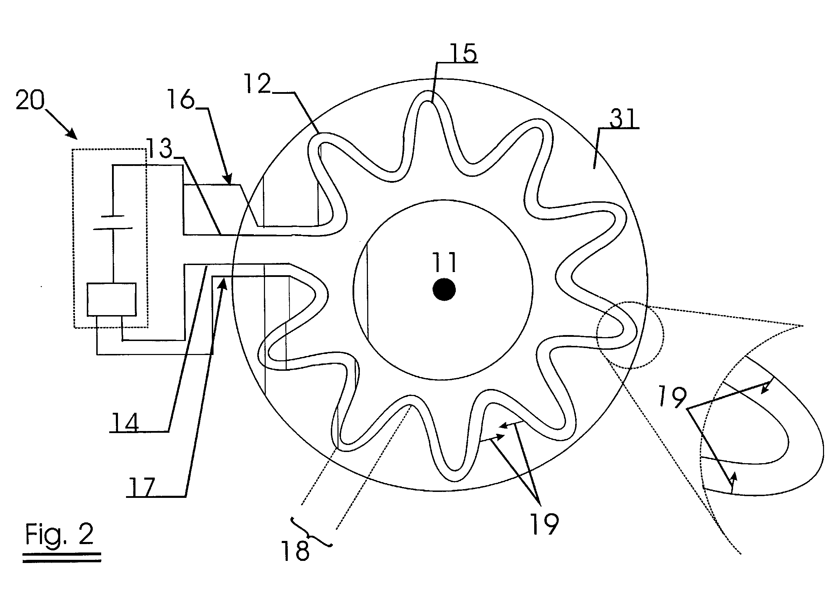

FIGURE 1 and FIGURE 2 show a preferred embodiment of an exhaust-claening unit as subject of the invention. The exhaust-cleaning unit has a ring-like structure. FIGURE 1 shows a section parallel with the axis 11 of the exhaust-cleaning unit. FIGURE 2 shows a section of the exhaust-cleaning unit, perpendicular to the axis 11.

An electrically regeneratable filter 12 is provided, being a sintered metal fiber fleece, having an essentially rectangular shape. This rectangle is pleated parallel to one pair of edges of the rectangle, so providing the other pair of edges a waves shape. The two edges parallel to the pleating lines are brought together at each edge, an contact body 13 and 14 is provided.

An electrically conductive substrate 15 is provided, being a sintered metal fiber fleece, having an essentially identical shape as the electrically regeneratable filter. This electrically conductive substrate 15 is pleated to an essentially identical shape as the electrically regeneratable filter 12. The electrically conductive substrate 15 is positioned downstream of the electrically regeneratable filter 12. To both edges of the electrically conductive substrate, two contact bodies 16 and 17 may be provided.

The metal fiber fleeces are preferably pleated in such a way that the thermal radiation heat, generated by the pleats 18, radiates to the adjacent pleats, as indicated by arrows 19. An important reduction of electrical power is obtained using this radiation heat to increase the temperature of the electrically regeneratable filter and electrically conductive substrate during execution of the regenetating, respectively releasing and reducing steps of the process as subject of the invention. Since the electrically regeneratable filter 12 is situated close to the electrically conductive substrate 15, thermal energy will radiate from the electrically regeneratable filter 12 to the electrically conductive substrate 15, so partially increasing the temperature of the electrically conductive substrate during regeneration of the filter.

As electrically conductive substrate, a sintered metal fiber fleece comprising three layers of stainless steel fibers is used. A first layer comprises 600 g/m² of Fecralloy® fibers with equivalent diameter of 17µm. A second layer of Fecralloy® fibers is applied on top of the first layer. This layer comprises 250 g/m² of fibers with equivalent diameter of 22 µm. A third layer of Fecralloy® fibers is applied on top of the second layer, having fibers with equivalent diameter of 35 µm. This third layer comprises 600 g/m² fibers.

An oxidizing catalyst Pt, and a reducing catalyst Rh is provided. BaO is preferably used as NOx-adsorbing compound.

As will be described further, the electrically regeneratable filter will be able to heat the substrate to some extend, e.g. to approximately 250°C. This temperature may be sufficient to desabsorb the N-comprising compounds from the NOx-adsorber. In this situation, an electrically nonconductive substrate may be used. In case higher sulfur percentages are present in the diesel, the substrate is to be heated to much higher temperatures, so the substrate is to be electrically conductive according to the present invention. This to be able to use the Joule-effect of the substrate to further increase its temperature to release the sulfur from the NOx-adsorber.

A second metal fiber fleece is used as an electrically regeneratable filter, which traps the soot particulate and SOF before the exhaust gas is to flow though the electrically conductive substrate. The soot and SOF, retained by this metal fiber fleece, will be released, e.g; vaporized as far as SOF is concerned, or combusts, as far as soot is concerned, and provide hydrocarbons and CO to the part of the exhaust system downstream of this metal fiber fleece, being an electrically regeneratable filter.

A sintered metal fiber fleece comprising three layers of stainless steel fibers is preferably used. A first layer comprises 600 g/m² of Fecralloy® fibers with equivalent diameter of 17µm. A second layer of Fecralloy® fibers is applied on top of the first layer. This layer comprises 250 g/m² of fibers with equivalent diameter of 22 µm. A third layer of Fecralloy® fibers is applied on top of the second layer, having fibers with equivalent diameter of 35 µm. This third layer comprises 600 g/m² fibers.

A soot retention of 91% was obtained, using a stainless steel fleece, having a porosity of 85%.

The soot was so-called depth filtered. This is to be understood as the fact that soot particles were trapped through the whole depth of the filter. SOF is present in its liquid phase on the soot particulates.

The contact bodies 13, 14, 16 and 17 used to provide electric current to the electrically regeneratable filter 12, and possibly the electrically conductive substrate 15, are preferably a Ni-sheet, which is sintered to the metal fiber fleeces. Alternatively, the Ni-sheet is soldered or welded to the metal fiber fleece, or a layer of Ni is sprayed (e.g. flame sprayed) to the metal fiber fleece.

The contact bodies 13, 14, 16 and 17 re connected to a power supply and/or an appropriate integrated circuit 20.

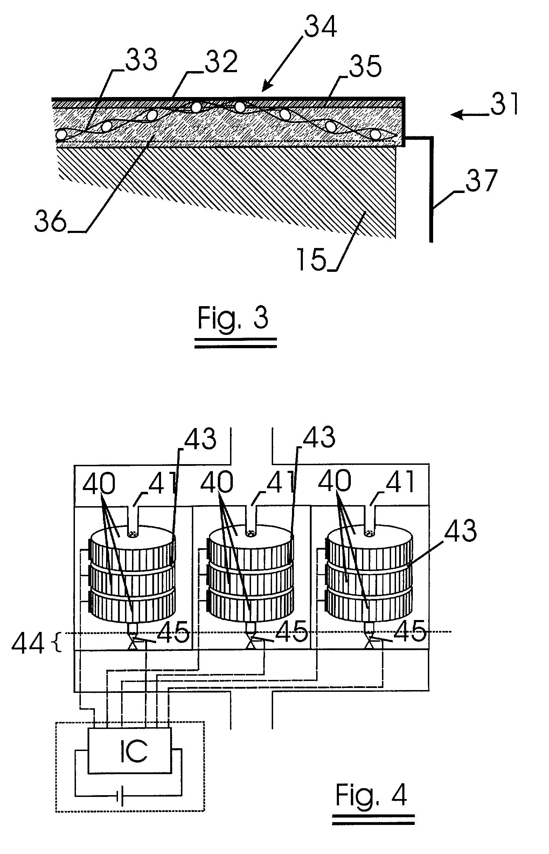

A detail AA' of FIGURE 1 is shown in FIGURE 3,being a part of the setup of a preferred embodiment of the exhaust-cleaning unit. A flank 31 of the exhaust-cleaning unit comprises a metal rim 32, to which a wire mesh 33 is spot welded on several spots 34. A fine layer of ceramic material 35 was sprayed on the electrical insulating side of the flank. A relatively thick layer of ceramic adhesive 36 was applied on this mesh and the electrical insulating side, before the electrically regeneratable filter (not shown in this figure) and the electrically conductive substrate 15, being a metal fiber fleece, loaded with an oxidizing catalyst, a reducing catalyst and an NOx-adsorbing compound, was adhered to this ceramic adhesive 36, which comprises more than 10% of weight of short metal fibers. The addition of such short metal fibers, having an equivalent diameter in he range of 1 to 150µm and a length over diameter (L/D) ratio in the range of more than 5, improves the ductility and thermal stability of such ceramic glues.

To improve the resistance to the mechanical tension, several studs 37 may be welded to the upper and lower rim of each exhaust cleaning unit.

When this NOx-converting unit is used, preferably the exhaust gas flows in from the outer side of the exhaust-cleaning unit (indicated with arrow 20), through the electrically regeneratable filter 12, through the electrically conductive substrate 15, out of the exhaust-cleaning system.

When an exhaust-cleaning unit as in FIGURE 1 and FIGURE 2 is used, the C- and NOx-loaded exhaust gasses are supplied to the soot trap, being the electrically regeneratable filter. Soot and SOF are retained by the filter. The exhaust gasses, still loaded with NOx is than provided to the NOx-adsorber. The oxidizing catalyst oxidizes the NOx and the oxidated products are trapped or adsorbed by the NOx-adsorber, forming N-comprising compounds, usually nitrides.

In the preferred embodiment, Pt is used as an oxidizing catalyst. NOx is oxidized to a large extend to NO2. NO2, and the remaining NOx is than adsorbed on by the NOx-adsorbing compound as N-comprising compounds. Preferably the NOx-adsorbing compound is BaO, so Ba(N03)2 is provided.

After a defined time period, the exhaust gas is preferably prevented to flow through the electrically regeneratable filter and the substrate, possibly electrically conductive. Electrical current is provided to the electrically regeneratable filter via current supply cables and the contact bodies. The electrically regeneratable filter is heated unto a temperature in the range of 500°C to 600°C. the soot and the SOF, which was retained by the filter, is combusted or vaporized, providing CO2, CO and hydrocarbon compounds.

Due to the increased temperature of the electrically regeneratable filter, the substrate is also heated, up to a temperature of more than 250°C. The N-comprising compounds become unstable and are released again as NO2 and possibly NOx. Thermal energy, radiated by this electrically regeneratable filer during regeneration is used.

These released products are reduced over the reducing catalyst, preferably Rh, providing N2 while CO and hydrocarbon compounds, present due to imperfect combustion of the soot, being oxidized.

In case the exhaust gasses comprise significantly amounts of S-comprising elements, the temperature of the substrate is preferably increased above 700 °C. The obtained S-comprising compounds, usually sulfates, adsorbed on the NOx-adsorber, also become unstable and are being released as S03. To obtain this temperature on the substrate, electrical current is provided to the substrate, which is electrically conductive.

In case BaO is used, SO3 has been adsorbed as BaSO4. The temperature is to increase to more than 700°C to release SO3 again. This may be realized when the substrate being electrically conductive, and electric current is provided to the substrate to heat this substrate due to its Joule effect.

An exhaust cleaning system, comprising several groups of exhaust-cleaning units is shown in FIGURE 4.

Several exhaust-cleaning units 40 are stacked one on top of the other. They all have a ring-like shape. A perforated metal tube 41 is positioned inside the inner opening 42 of the exhaust cleaning units. Between each exhaust-cleaning unit, a disc-like SiO2 felt material 43 is positioned to thermally insulate the different exhaust cleaning units from each other.

Several stacks are positioned in an exhaust cleaning system. A valve system 44 is installed comprising one or several valves 45, which can shut off periodically one or more stacks, while other stacks are kept inline. During this shut off, one or several exhaust cleaning units are regenerated and execute the releasing and reducing steps of the process as subject of the invention. The electric current supply to the different exhaust cleaning units and the control of the valve system 44 may be done by one integrated circuit 46.

## Claims

1. A process for decreasing the amount of NOx in the exhaust gasses of a diesel combustion system, comprising the steps of
■ Providing an electrically regeneratable filter comprising metal fibers, and an NOx-adsorber, which comprises a substrate, an oxidizing catalyst, a reducing catalyst and a NOx-adsorbing compound;
■ retaining soot and soluble organic fraction out of said exhaust gasses flowing through said electrically regeneratable filter;
■ Oxidizing NOx, present in said exhaust gasses flowing through said substrate, using a catalytic reaction of said oxidizing catalyst, and adsorbing said oxidized NOx as adsorbed N-comprising components on said NOx-adsorbing compound;
■ Regenerating said electrically regeneratable filter by electrical current which is provided to said electrically regeneratable filter, increasing said electrically regeneratable filters temperature in order to provide CO2, CO and hydrocarbon compounds to the NOx-adsorber;
■ desadsorbing and reducing said adsorbed NOx to N2, using a catalytic reaction of the reducing catalyst;

2. A process for decreasing the amount of NOx in the exhaust gasses of a combustion system as in claim 1, said increasing the temperature of said substrate is provided by thermal energy, provided during electrically regenerating of said electrically regeneratable filter.

3. A process for decreasing the amount of NOx in the exhaust gasses of a combustion system as in claim 1 or 2, said substrate being electrically conductive, said increasing the temperature of said substrate is obtained by providing electric current to said substrate.

4. A process for decreasing the amount of NOx in the exhaust gasses of a combustion system as in claim 1 to 3, said NOx-adsorber comprising BaO.

5. A process for decreasing the amount of NOx in the exhaust gasses of a combustion system as in claims 1 to 4, said substrate is heated above 250°C.

6. A process for decreasing the amount of NOx in the exhaust gasses of a combustion system as in claims 1 to 5, further comprising the step of heating the substrate above 700°C by applying electric current to said substrate.

7. A process for decreasing the amount of NOx in the exhaust gasses of a combustion system as in claims 1 to 6, said substrate is a sintered metal fiber fleece.

8. A process for decreasing the amount of NOx in the exhaust gasses of a combustion system as in claims 1 to 7, said metal fibers comprising Fe, Al and Cr.

9. An exhaust-cleaing unit, comprising an electrically regeneratable filter, an oxidizing catalyst, a reducing catalyst and a NOx-adsorbing compound, **characterized in that** said oxidizing catalyst, said reducing catalyst and siad NOx-adsorbing compound being present on a substrate, said substrate comprising metal fibers, said electrically regeneratable filter being present upstream of said substrate.

10. An exhaust-cleaing unit as in claim 9, said substrate being a sintered metal fiber fleece.

11. An exhaust-cleaing unit as in claim 9 to 10, said metal fibers metal fibers comprising Fe, Al and Cr.

12. An exhaust-cleaing unit as in claim 9 to 11, said NOx-adsorber comprising BaO.

13. An exhaust-cleaing unit as in claim 9 to 12, said metal fibers having an equivalent diameter in the range of 1 to 100µm

14. An exhaust-cleaing unit as in claim 10 to 13, said metal fiber fleece being pleated.

15. An exhaust-cleaing unit as in claim 9 to 14, electrically regeneratable filter being the electrically conductive substrate.

16. An exhaust cleaning system, comprising at least one exhaust cleaning unit as in claim 9 to 15.
